(19) Europäisches Patentamt
European Patent Office
Office européen des brevets

(11) **EP 2 077 053 B1**

(12) **EUROPEAN PATENT SPECIFICATION**

(45) Date of publication and mention
of the grant of the patent:
**27.03.2019 Bulletin 2019/13**

(21) Application number: **07820987.1**

(22) Date of filing: **05.10.2007**

(51) Int Cl.:
*H04W 60/04* (2009.01)    *H04W 48/18* (2009.01)
*H04W 92/02* (2009.01)    *H04W 60/00* (2009.01)
*H04W 84/12* (2009.01)    *H04W 88/14* (2009.01)

(86) International application number:
**PCT/EP2007/060614**

(87) International publication number:
**WO 2008/043718 (17.04.2008 Gazette 2008/16)**

(54) **SYSTEM AND METHOD FOR MOBILITY MANAGEMENT**

SYSTEM UND VERFAHREN ZUR MOBILITÄTSVERWALTUNG

SYSTÈME ET PROCÉDÉ POUR ASSURER LA GESTION DE MOBILITÉ

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **09.10.2006 EP 06291571**

(43) Date of publication of application:
**08.07.2009 Bulletin 2009/28**

(73) Proprietor: **Orange**
**75015 Paris (FR)**

(72) Inventors:
• **MURZEAU, Bastien**
**F-92340 Bourg la Reine (GB)**
• **FUCCELLARO, Jean-Louis**
**London W3 9SN (GB)**
• **HOU, Jindong**
**London W4 5AU (GB)**

(56) References cited:
**EP-A- 1 670 273**       **EP-A1- 1 435 748**
**FR-A1- 2 832 895**      **US-A1- 2005 239 443**
**US-A1- 2006 099 952**

**Description**

**Field of the Invention**

The present invention relates to a system and method for managing a change of affiliation of mobile terminals between multiple access networks.

**Background of the Invention**

A mobile terminal may be capable of communicating via a plurality of access networks. Furthermore, these access networks may be different types of access networks, such as GPRS (General Packet Radio Service) cellular networks or WLANs (Wireless Local Area Network). A mobile terminal may have a different interface for providing a connection to each of these different types of access network. Each of these interfaces may consume power both when a communications session is currently being provided to the mobile terminal, and also when a communications session is not currently being provided, but a connection to the access network is being maintained. In both cases, a mobile terminal may itself select which type of access network to use at any given time.

In US2005/0048977 a method of switching between a WLAN and a WAN (Wide Area Network) is described in which only one interface (WLAN or WAN) is active at any given time.

Document EP 1 435 748 from the same Applicant discloses a method for managing the mobility of a mobile terminal within a plurality of access networks operable to provide a facility for mobile terminals to communicate data in accordance with a communication service when in a coverage area provided by the access network, the method comprising receiving, network evaluation messages from a mobile terminal, identifying one of the access networks with which the mobile terminal should be affiliated for communicating the data via a communications link provided with the access network, and communicating an instruction to the mobile terminal to change affiliation to the identified access network.

Document US 2005/239443 A1 discloses the choice for a communication terminal of a wireless access network among a plurality of available access networks based on lower power consumption which match the remaining life of a battery mounted of the communication terminal.

Document EP1670273 discloses maintaining quality of service in accordance with the congestion state of the access networks and with respect to a level of quality subscribed by the mobile nodes.

Document US2006/0099952 discloses a selection of an access network based on different criteria whose one is power consumption.

**Summary of Invention**

According to an aspect of the present invention, there is provided a telecommunications system which comprises a plurality of access networks, each of which can provide a facility for mobile terminals to communicate data in accordance with a communications service when in a coverage area provided by the access network. The telecommunications system also comprises a mobility manager which receives network evaluation messages from a mobile terminal which provide an indication of a quality of communications available via a communications link with one or more of the plurality of access networks, which are currently available for communicating data. The mobility manager identifies one of the access networks with which the mobile terminal should be affiliated for communicating the data via a communications link provided with the access network, and communicates an instruction to the mobile terminal to change affiliation to the identified access network. The mobility manager identifies the access network with which the mobile terminal should become affiliated in accordance with an amount of power, which the mobile terminal may consume when communicating via the identified access network.

In this way, the power consumption of a mobile terminal can be controlled, and preferably kept as low as possible, while still enabling access network selection to be provided in accordance with a communications quality which can be provided by the access networks.

In order to provide a communications service to a mobile terminal as the mobile terminal roams within a geographical area, it is known from WO 03/047296 and EP1435748 to provide a mobility manager to direct a change of affiliation of the mobile terminal to access networks via which the mobile terminal can communicate within that geographical area. The mobility manager can therefore assist in the provision of a substantially un-interrupted communications service (sometimes referred to as seamless) as the mobile terminal roams throughout the geographical area changing affiliation from a first access network to a second access network, for instance when the mobile terminal moves into a coverage area of the second access network and away from a coverage area of the first access network. Alternatively, the change of affiliation could occur without the mobile terminal leaving the coverage area of the first access network. To this end, the mobility manager receives access network evaluation messages from the mobile terminals, which report on a current communications link quality of each of the access networks, which become available to the mobile terminal. The mobility manager therefore directs a change of affiliation of the mobile terminal from one access network to another in accordance with a communications service being provided to the mobile terminal and a quality of the communications link provided to the mobile terminal by the available access networks.

Embodiments of the present invention provide an arrangement, which addresses a technical problem associated with power consumption, in order to as far as possible maintain continuity of service as the mobile terminal roams throughout a geographical area changing from one access network to another. As such, at any one time there may be more than one access network available to the mobile terminal. Embodiments of the present invention can provide an arrangement in which the mobility manager determines an access network via which the mobile terminal should communicate to provide a service to a mobile terminal in accordance with decision criteria such as the communications service being provided to the mobile terminal, the quality of service provided by each of the available communications links and an amount of power, which will be required to support the communication service via each of those communications links. Embodiments of the invention can therefore provide an arrangement for balancing the quality of service provided to mobile terminals with power management considerations relating to the mobile terminals.

In some situations, the mobile terminal may be required to maintain more than one communications link to different access networks. If a mobile terminal is required to maintain more than one active communications link, then an amount of power consumed by the mobile terminal can represent a significant drain on a limited power supply, provided for example by a battery. By providing a mobility manager, which can select a most appropriate access network based on decision criteria which include an amount of power which the mobile terminal will consume, when communicating via this communications link, then power management of the mobile terminal can be improved, whilst providing a substantially un-interrupted communications service.

A mobile terminal can be considered to operate in either a busy mode or an idle mode. The mobile terminal is considered to be operating in the busy mode when a communications session is currently being provided over an access network to the mobile terminal. The mobile terminal is considered to be operating in the idle mode when a communications session is not currently being provided, but when a connection to an access network is being maintained. When the mobile terminal is in the busy mode, power is consumed by the mobile terminal in transmitting data across the air interface to the access network. When the mobile terminal is in the idle mode, an interface of the mobile terminal will continue to consume power in maintaining a connection to the access network.

Embodiments of the invention provide a current access network and a backup access network when in the busy mode, and provide a current access network when in the idle mode. In particular, when in the busy mode, a current access network is provided which supports an ongoing communications session, and a backup access network is provided to which a connection is established and maintained by the mobile terminal and which can be selected to rapidly take over the ongoing communications session if the current access network is no longer able to support the communications session. In the idle mode, a current access network is provided to which a connection is maintained by the mobile terminal such that if a communications session is initiated, the current access network can quickly set up and support the communications session. Thus although the mobile terminal is in the idle mode and does not currently support a communications session, a current access network is provided through which a communications session may be initiated.

In the idle mode, the mobile terminal does not have any traffic data to send. Nonetheless, an active connection to the network is required in order to be able to provide rapidly a communications session on demand. As such, the communications interface is arranged to communicate signalling data in order to maintain a connection as required by the communications standard to which the interface operates. In order to reduce an amount of power consumed by the mobile terminal when in the idle mode, the mobility manager can select to which of the available access networks the mobile terminal should be affiliated.

In the active mode, because the mobile terminal is currently supporting a communications session to provide a communications service to a user, the mobile terminal should activate its communications interfaces via which the mobile terminal may communicate to provide a substantially un-interrupted service. Due to the mobility manager being provided with an indication of all the access networks, which are available to the mobile terminal, the mobility manager is able to direct the mobile terminal to reduce the number of communications interfaces which are active while still being able to provide a substantially un-interrupted service.

The mobility manager can achieve this by querying a neighbouring cells table which contains the neighbouring radio-coverage cells from various access networks for a particular terminal. The table stores links which specify for each cell of each network the neighbouring cells belonging to the other networks. In this way, the mobility manager retrieves data relative to the current cell position of the mobile terminal. This enables the mobility manager to be aware of access networks via which a mobile terminal could communicate without requiring the mobile terminal to switch on each interface to detect the access networks, which would result in an undesirable consumption of power.

The mobility manager can direct the mobile terminal to activate one or more communications links, other than a current communications link via which the mobile terminal is communicating, in a backup state, in accordance with the access networks which are available and an amount of power which these communications links consume. In the backup state, the communications link may be activated, but not communicating data so that if there is a requirement to switch quickly from the current communications link, the likelihood of suffering an interruption in the communications session is reduced.

Various further aspects and features of the present invention are defined in the appended claims.

## Brief Description of the Drawings

Embodiments of the present invention will now be described by way of example only with reference to the accompanying drawings where like parts are provided with corresponding reference numerals and in which:

Figure 1 schematically illustrates a network arrangement which provides a facility for mobile terminals to communicate via a GPRS network, WiMax networks or WLAN networks;

Figure 2 schematically illustrates the two-way signalling between a mobile terminal and a mobility manager required to conduct a change of affiliation of the mobile terminal from one access network to another;

Figure 3 schematically illustrates the message exchange flow between the mobile terminal and the mobility manager of Figure 2;

Figure 4 schematically illustrates the differences between the operation of a mobile terminal in an idle mode and a busy mode according to an embodiment of the invention;

Figure 5 is a schematic flow diagram of an idle mode power saving method in accordance with an embodiment of the invention;

Figure 6 is a schematic flow diagram of a busy mode power saving method in accordance with an embodiment of the invention; and

Figure 7 schematically illustrates an example embodiment of the present invention in which a mobile terminal is transiting through multiple access networks and changing between the idle mode and the busy mode.

## Description of the example embodiments

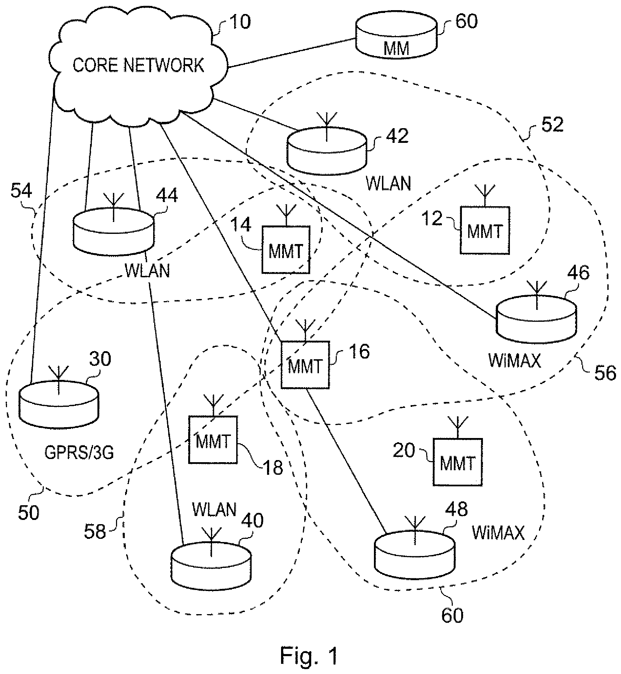

Referring to Figure 1, a telecommunications system is shown which provides a facility for mobile terminals to communicate data via a plurality of different wireless access networks. The system includes a core network 10 which provides overall network control and routes signalling messages between the access network entities. Internet Protocol (IP) packets are delivered to selected mobile terminals 12, 14, 16, 18, 20 via respective access points 30, 40, 42, 44, 46, 48 of different access networks which operate in accordance with different radio access interface standards. As shown in Figure 1, the core network 10 is connected to a GPRS/3G network which is represented by an access point 30, providing a coverage area represented by a dashed line within which radio communications with a mobile terminal can be made. The wireless access networks also include WLAN (Wireless Local Area Network) represented by transceivers 40, 42, 44, and WiMax networks represented by transceivers 46, 48, which provide respective coverage areas 52, 54, 58, 56, 60. Each of the different access networks provides a respective radio-coverage area within which a mobile terminal 12, 14, 16, 18, 20 can communicate IP packets to and from the access network via an air interface. It will be appreciated that although the mobile terminals are communicating IP packets, the IP packets are not limited to any particular service, but can include voice communications sessions, multi-media communications sessions and other data types, which may be communicated via either packet switched or circuit switched networks.

Each of the WLAN transceivers 40, 42, 44 provides a short-range radio-coverage area within which mobile terminals 12, 14, 16, 18 can communicate IP packets with a respective WLAN transceiver 40, 42, 44. Each of mobile terminals 12, 14, 16, 18, 20 is able to communicate via either the GPRS access network 30, a WLAN transceiver 40, 42, 44 or a WiMax transceiver 46, 48. In a situation in which a mobile terminal is within a radio coverage area of more than one of the WLAN transceivers 40, 42, 44, the WiMax transceivers 46, 48 or the GPRS access network 30, then the mobile terminal can communicate via more than one access network. For example, the mobile terminal 12 is within an overlapping coverage area of the WLAN transceiver 42 and the WiMax transceiver 46 and can therefore communicate via either the WLAN 42 or the WiMax transceivers 42, 46. Accordingly, at it's current position, the mobile terminal 12 may communicate via either of the WLAN or the WiMax access networks 42, 46, but not via the GPRS access network 30. In comparison, the mobile terminal 14 is within an overlapping coverage area of the WLAN 44 and the GPRS/3G transceiver 30 and can therefore communicate via either of these two access networks, the mobile terminal 16 is within the coverage area of the GPRS/3G network 30, the WiMax transceiver 46 and the WiMax transceiver 48 and can communicate via either of these two access networks, and the mobile terminal 18 is within the coverage area of the GRPS/3G network 30 and the WLAN transceiver 40 and can communicate via either of these two access networks.

### General Operation of the Mobility Manager

In general, the mobility of the mobile terminals 12, 14, 16, 18, 20 is controlled by a mobility manager 60 which receives access network evaluation messages from each mobile terminal relating to a strength of signals received from one or more of the mobile access networks 30, 40, 42, 44, 46, 48 for which the mobile terminals are currently positioned within the radio coverage area provided by the wireless access networks. The mobility manager then issues mobility instructions to the mobile terminals via the core network 10 and via a respective access network. The mobility instructions, termed hereinafter as handover instructions, indicate to the mobile terminal to which access network it should become affiliated. However, as will be appreciated, the mobility manager 60 not only directs handover but also a change in service in accordance with an available bandwidth provided by the access networks.

### Mobility Manager Operating in accordance with the Present Technique

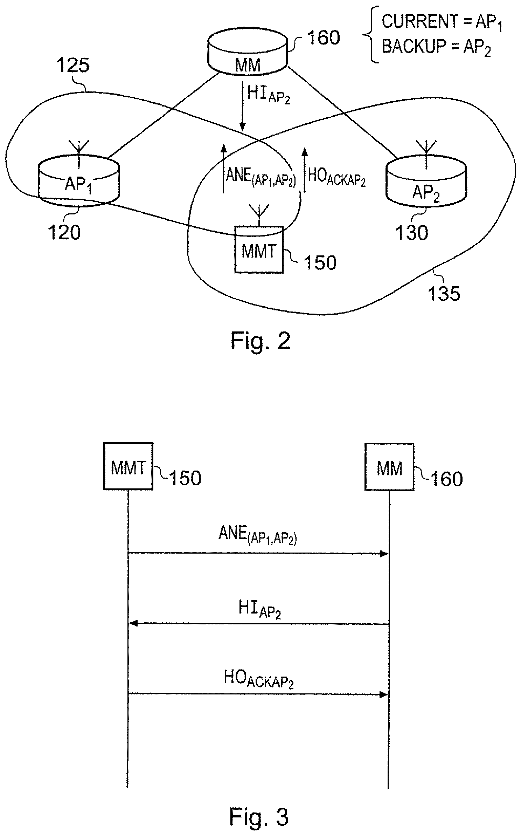

Figures 2 and 3 schematically illustrate the signalling messages exchanged between a mobility manager 160 and a mobile terminal 150 in respect of a mobility decision made by the mobility manager 160 in accordance with an example embodiment of the present technique. The mobile terminal 150 periodically communicates an access network evaluation message indicating the radio-signal strength of each access point to which it could be affiliated. In Figure 2, the mobile terminal 150 is within the radio-coverage area 125 of an access point $AP_1$ 120 and the radio-coverage area 135 of an access point $AP_2$ 130. Accordingly, as for a conventional operation described above, the mobile terminal communicates an access network evaluation message including access network evaluation data $ANE_{AP1}$ in respect of access point $AP_1$ 120 and access network evaluation data $ANE_{AP2}$ in respect of access point $AP_2$ 130 to the mobility manager 160.

The mobility manager 160 compares the access network evaluation data $ANE_{AP1}$ and $ANE_{AP2}$, and makes a determination as to which access network the mobile terminal should be affiliated to. This determination is made not only on the basis of the relative radio signal strength of the respective access points, but also on criteria such as the current traffic levels on the access points and the likely power consumption of the mobile terminal on each of the access points. The mobility manager 160 can thereby provide a trade-off between Quality of Service (QoS) and power consumption. If the mobility manager 160 determines that the mobile terminal should switch affiliation to a different access network, then a handover instruction message is communicated to the mobile terminal 150. In the present case, it is assumed that the mobile terminal 150 is initially affiliated to a first access network via access point $AP_1$, but that the mobility manager 160 determines that it should instead be affiliated to a second access network via access point $AP_2$. Accordingly, referring to Figures 2 and 3, the mobility manager 160 communicates a handover instruction message $HI_{AP2}$ to the mobile terminal 150 indicating to the mobile terminal 150 that it should change affiliation to the second access network and attach to access point $AP_2$. Upon receipt of the handover instruction message $HI_{AP2}$, the mobile terminal 150 commences a change of affiliation to $AP_2$, and then communicates a handover acknowledgement message $HO_{ACKAP2}$ indicating that the mobile terminal 150 has changed affiliation to the second access network.

### Busy Mode and Idle Mode

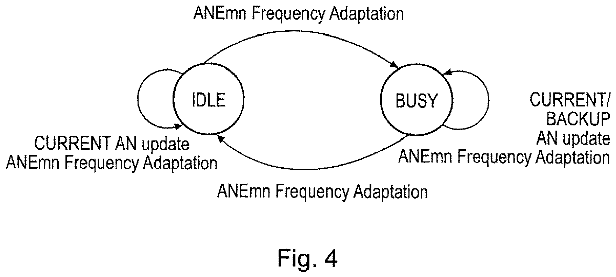

Figure 4 schematically illustrates the system state of a mobile terminal in both a busy mode and an idle mode. The mobile terminal is considered to be in a busy mode when traffic data is being communicated to and from the terminal, and to be in an idle mode when no traffic data is being communicated to and from the terminal.

Although the mobile terminal does not send or receive traffic data when in the idle mode, an active connection to the network is required in order to be able to rapidly provide a communications session when required, for instance when the user of the mobile terminal wishes to make a call, or when the network is notified of an incoming call for the mobile terminal. Accordingly, in the idle mode, the communications interface communicates signalling data to maintain a connection. In the active mode, the mobile terminal is currently supporting a communications session to provide a communications service to a user. As such, when in the busy mode, both traffic data and signalling data are being sent and received by the mobile terminal.

Referring to Figure 4, when the mobile terminal is in the idle mode, only an interface to its current access network is active. The current access network may be updated (re-selected) if necessary, either to maintain a communications link or to select an access network which will use the lowest possible amount of power. In contrast, in accordance with the present technique, when the mobile terminal is in a busy mode, two network interfaces are maintained and updated. The two network interfaces are, in particular, a current access network and a backup access network (wherever possible). The backup access network is intended to take over from the current access network if the current access network ceases to be able to support a communications session. The active connection provided to the backup access network enables the backup access network to take over quickly from the current access network in supporting a communications session should the current access network no longer be able to support the communications session.

For instance, in the case of a GPRS network, the backup access network can provide an active connection by having a PDP (Packet Data Protocol) context activated, so that communication of data can commence without the need for the PDP context to first be requested and activated. For the example of a WiFi access network, a mobile IP address may be acquired from the access network to provide communications to the mobile terminal when required. In this way, a relatively seamless transition from the current access network to the backup access network can be provided.

Moreover, when the mobile terminal is in an idle mode and no traffic is being transmitted, the frequency of the access network evaluation messages (ANEmn) is set to be low, whereas access network evaluation messages are sent more frequently when the mobile terminal is in a busy mode to maintain seamless service quality. When the mobile terminal switches between the busy and idle modes, its ANEmn frequency is adapted accordingly to match the new mode that the mobile terminal is about to enter for intelligent power-management purposes.

In particular, because the mobile terminal is able to adapt its ANEmn sending frequency according to its dynamic conditions, for instance different traffic states and different types of current access network, it can reduce the terminal's power consumption to a certain degree. For example, as indicated above, the mobile terminal can send messages less frequently when it is in an idle mode than when in a busy mode. Also, it may be desirable for the mobile terminal to send messages more frequently in a WLAN than in a 3G network environment since it is more likely that the WLAN coverage will be lost for a mobile user. This is because 3G networks cover a wide area using multiple overlapping radio-coverage cells and include mobility functions for maintaining communications sessions on the network, whereas a WLAN provides only a relatively short-range coverage area which a mobile terminal, by virtue of its portability, is more likely to leave, and because a WLAN does not include mobility functions to handover to other WLAN access networks.

The mobility manager will know the current access network of the mobile terminal and its traffic state (idle or busy) because it keeps a record of the current access network of the terminal and of any service session ongoing in respect of the terminal. The mobility manager is able to use this information to further reduce the power consumption of the terminal by instructing the terminal as to which ANEmn message frequency should be used. This can be achieved by including an 'ANEmn_Frequency_Indicator' field into messages sent from the mobility manager to the mobile terminal. The field can be populated either with a value of zero, indicating that the terminal should keep using the existing frequency, or a non-zero value indicating a specific sending frequency (e.g. 2 times/sec).

In order to know what frequency the mobile terminal should use under specific conditions, the mobility manager may store a pre-defined ANEmn_Frequency Table, which specifies the frequency values to be used under different traffic states and access network (AN) types. Table 2 provides an example of such a table.

**Table 2**

| AN Type\Terminal State | IDLE | BUSY |
|---|---|---|
| AN Type A | $F_{AI}$ | $F_{AB}$ |
| AN Type B | $F_{BI}$ | $F_{BB}$ |
| AN Type C | $F_{CI}$ | $F_{CB}$ |
| .. | ... | ... |

## Power Saving Method for the Idle Mode

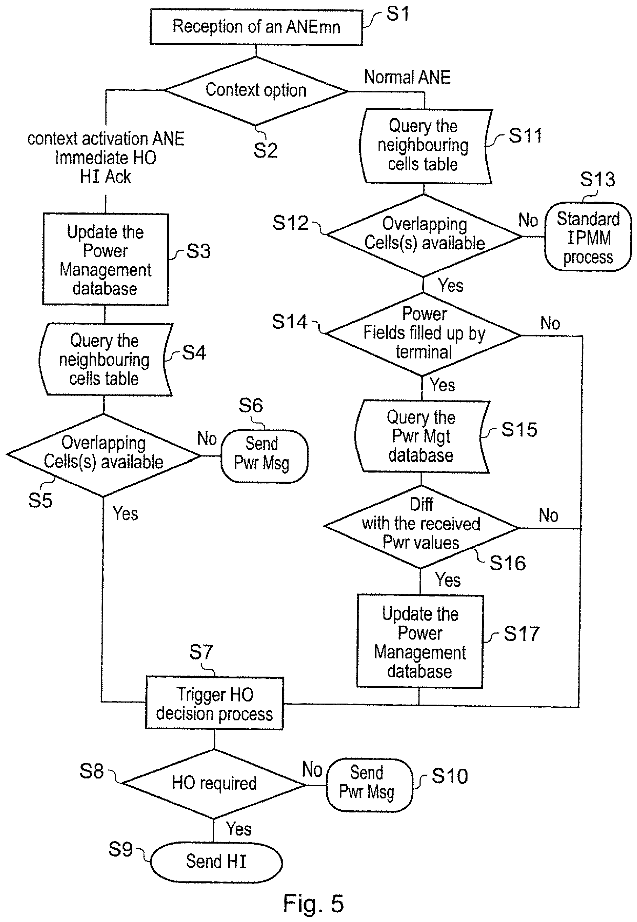

Figure 5 is a schematic flow diagram which illustrates a power saving method applied when the mobile terminal is in an idle mode. The method starts at a step S1, where the mobility manager receives an access network evaluation message from the mobile terminal. The access network evaluation messages may include power fields which can contain power values indicating power related information regarding the mobile terminal.

Two example power fields which could be used are a power preference field and a terminal speed indicator field. The power preference field could indicate a power preference choice of the user. This choice could be between "economic", which would indicate that the terminal should use the least power consuming interface, even if this might not be the most appropriate interface to support a service, and "normal", which would indicate that the terminal should use a low-power consumption network which is able to fully support a higher service quality.

The terminal speed indicator field could be used to indicate whether or not the terminal is in a high speed environment, for instance in a train or car. This information can be used to select reliably network interfaces. For instance, if a the terminal speed indicator field indicates that the mobile terminal is moving fast, a WLAN access network may not be selected because WLAN does not work well during high speed mobility because the mobile terminal is likely to leave the coverage area of the WLAN in a relatively short period of time. The terminal speed indicator field could be set manually by the user, or set automatically in response to a detection by the terminal of its current speed.

At a step S2, the method is diverted to either step S3 or S11 in dependence on the type of access network evaluation message. If the access network evaluation message is a normal access network evaluation message then this means that the mobile terminal is already connected to an access network and the situation is currently stable. The method will then move on to the step S11.

If on the other hand the network evaluation message is a context activation access network evaluation message, an immediate handover message or a handover instruction acknowledgement message, then the mobility manager will detect the power values within the power fields of the message and then, at a step S3, update the power management database with the power values detected from the access network evaluation message if different from the power values stored in the power management database.

At a step S4, the mobility manager queries a neighbouring cells table which contains the neighbouring radio-coverage cells from various access networks for a particular terminal. The table stores links which specify for each cell of each network the neighbouring cells belonging to both the same network and other networks. In this way, the mobility manager retrieves data relative to the current cell position of the mobile terminal. This enables the mobility manager to be aware of access networks via which a mobile terminal could communicate without requiring the mobile terminal to switch on each interface to detect the access networks, which would result in an undesirable consumption of power. At a step S5, the mobility manager determines, from the data retrieved from the neighbouring cells table, if there are any surrounding cells. If the current cell position of the mobile terminal is surrounded by other wireless access technology, the mobility manager will select a single interface to be activated. The single interface selected will preferably be the least power consuming interface available, although other criteria may be utilised in making the selection, such as network traffic conditions and likely quality of service, which are not related to power consumption, and also the power preference field and terminal speed indicator field described above. In order to select this single interface, which can be the same as the current interface, a handover decision is triggered by the mobility manager. If no neighbouring cells are identified, this means that only one access network is available, and so the mobile terminal remains on its current interface and the mobility manager communicates, at a step S6, a power message to the mobile terminal instructing the terminal that all network interfaces except the current interface should be switched off. By keeping active only the interfaces of the mobile terminal corresponding to the identified networks, an optimal trade-off is achieved between power consumption for the terminal and QoS for the traffic data being communicated to and from the terminal.

At a step S7, a handover decision process will be triggered if either neighbouring cells were detected at the step S5. If a handover decision process is triggered at the step S7, then at a step S8 it will be determined by the mobility manager whether the mobile terminal should change affiliation from its current access network to another access network. This determination will be made on the basis of conventional mobility criteria, and also on the basis of the power values stored in the power management database and the predicted power consumption of the access networks to which the mobile terminal could be affiliated. If a determination is made by the mobility manager that the mobile terminal should change affiliation from its current access network to a different access network, then the mobility manager will communicate, at a step S9, a handover instruction to this effect to the mobile terminal. In response to the handover instruction, the mobile terminal will change affiliation to the access network indicated by the handover instruction and will then switch off all other interfaces except the one required to communicate with the new access network. If, on the other hand, the mobility manager determines that the mobile terminal should not change affiliation, then the mobility manager will communicate, at a step S10, a power message to the mobile terminal indicating that only the current interface being used to communicate with the current access network should be kept active, and that all other interfaces should be switched off.

If, at the step S2, the access network evaluation message received from the mobile terminal is a normal access network evaluation message then processing moves on to the step S11 rather than the step S3. In this case, the mobility manager queries the neighbouring cells table to retrieve data relative to the current cell position of the mobile terminal. At a step S12, the mobility manager determines, using the data retrieved from the neighbouring cells table, if there are any surrounding cells. If no neighbouring cells are identified, this means that only one access network is available, and so the mobile terminal remains on its current interface and the mobility manager will commence a standard IPMM (Internet Protocol Mobility Management) process on the basis of the received access network evaluation message at a step S13 as described above with respect to the general operation of the mobility manager 60.

Alternatively, if the current cell position of the mobile terminal is determined at the step S12 as being surrounded by other wireless access technology, the mobility manager will look at the power values within the power fields of the access network evaluation message at a step S14. If the power fields are empty (in which case the power values in the power management database do not need updating), processing proceeds directly to the step S7, and the mobility manager triggers a handover decision to re-select the current interface. If, at the step S14, the power fields are determined to be populated with power values, the power management database is queried at a step S15, and the power values in the power management database are compared, at a step S16, with the power values in the power fields of the access network evaluation message. If this comparison determines a difference between the power values in the power management database and the power values in the power fields of the access network evaluation message, the power management database is updated with the new power values at a step S17. Then, processing continues on to the step S7, where a handover decision process is triggered. The processing of the steps S7 to S10 when following the steps S11 to S17 is the same as the processing of the steps S7 to S10 when following the steps S3 to S6.

Several modifications to previous mobile terminals, mobility managers and network messaging protocols may be required to implement the process of Figure 5. For instance, the power message is a new message which will require a one-way protocol to be provided from the mobility manager to the mobile terminal. The power message indicates the access network which should be activated. Any other access networks not present in this message will be deactivated by the terminal upon reception of the message. Other modifications may include the modification of the mobile terminal to include a function for activating/deactivating its interfaces and the modification of the mobility manager to use power management information in the mobility algorithm.

## Power Saving Method for the Busy Mode

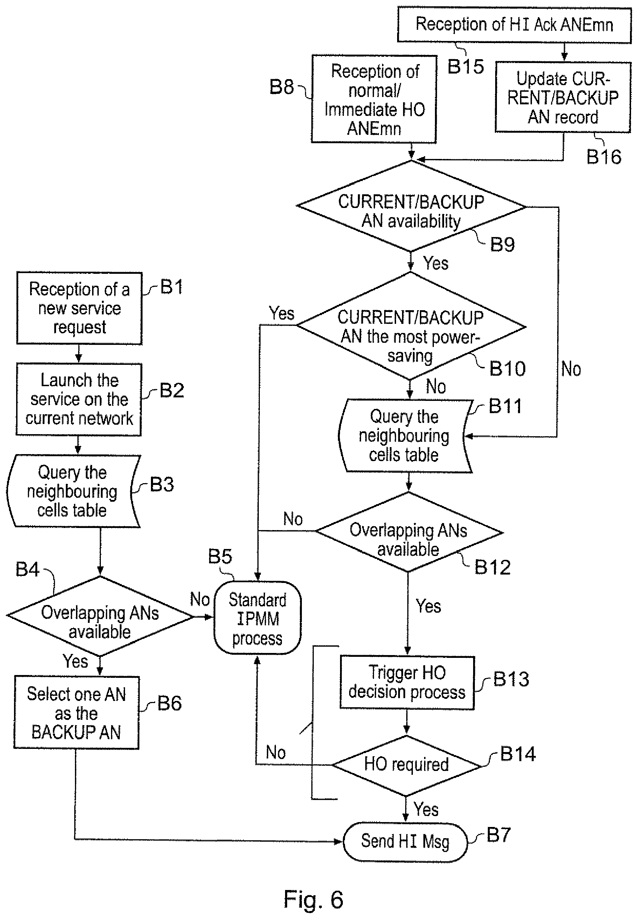

Figure 6 is a schematic flow diagram which illustrates a power saving method applied when the mobile terminal is in, or moves into, a busy mode. Different starting points in the flow diagram apply in dependence on a type of message received at the mobility manager from the mobile terminal. In a case where the message is a new service request message, processing starts at a step B1, in the case where the message is a normal access network evaluation message or an immediate handover access network evaluation message, processing starts at a step B8, and in the case where the message is a handover instruction acknowledgement message, processing starts at a step B15.

Returning to the first case, a new service request message is received at the mobility manager at the step B1. In response to this message, the mobility manager communicates, at a step B2, an instruction to the mobile terminal to launch the service on the access network to which it is currently affiliated, thereby providing a prompt start for the service. At this point, the state of the mobile terminal is changed from idle to busy, to reflect the fact that a service is currently being provided. Now that the mobile terminal is in the busy mode, the mobility manager is required to attempt to find another access network to act as a backup access network for the ongoing service session.

Accordingly, at a step B3, the mobility manager queries the neighbouring cells table to determine if other access networks are available for use by the mobile terminal. The use of the neighbouring cells table enables the mobility manager to be aware of access networks via which a mobile terminal could communicate without requiring the mobile terminal to switch on each interface to determine the available access networks, which would result in an undesirable consumption of power. If it is determined at the step B3 that no other access networks are available, the mobility manager applies the standard IPMM process at a step B5. However, if one or more other access networks are available, the mobility manager selects the least power consuming access network which is capable of supporting the service as the backup access network at a step B6, and sends, at a step B7, a handover instruction message to the mobile terminal including an indication of the selected backup access network. In response, the mobile terminal activates the interface for the selected backup access network and switches off all interfaces other than interfaces for the current and backup access networks.

Returning to the second case, a normal access network evaluation message or an immediate handover access network evaluation message from the mobile terminal is received by the mobility manager at the step B8. In response, the mobility manager checks, at a step B9, whether the current and/or backup access network of the mobile terminal is unavailable or is likely to soon become unavailable. The unavailability could be due to the terminal moving out of the radio-coverage area of the access network, or alternatively could be due to a likelihood of an unacceptable quality of service being provided by the access network. If the mobility manager determines that neither of the current and backup access networks are unavailable nor are likely to become unavailable, the mobility manager determines, at a step B10, whether the current and backup access networks are the least power consuming access networks. This determination is made using an access network power ranking table which stores a ranked list of different access networks or types of access network. If the current and backup access networks are the least power consuming access networks then processing will proceed to the step B5, where the standard IPMM process will be followed.

Alternatively, if it is determined by the mobility manager that the current and backup access networks are not the least power consuming networks then the mobility manager will query the neighbouring cells table at a step B11 to determine whether any other access networks are available for use by the mobile terminal. If, at a step B12, it is determined that no such other access networks are available, then processing moves on to the step B5, where the standard IPMM procedure is followed. If however one or more access networks are available according to the neighbouring cells table, a handover decision process is triggered at a step B13. If the handover decision process determines that no handover should take place for either the current or backup access network, then processing continues at the step B5 using the standard IPMM procedure. However, if the handover decision process determines that a change of affiliation of one or both of the current and backup access networks is required, then a handover instruction message indicating a new current and/or backup access network for use by the mobile terminal will be communicated to the mobile terminal at the step B7.

Returning to the step B9, where it is determined whether the current and/or backup access network of the mobile terminal is unavailable or is likely to soon become unavailable, if the mobility manager determines that one or both of the current and backup access networks is unavailable or will soon become unavailable, the mobility manager queries the neighbouring cells table at the step B11, and follows the procedure outlined above in respect of steps B11, B12, B5, B13, B14 and B7. In other words, if one or both of the current and backup access networks is determined as unavailable, the power saving step of B10 will be omitted, because for a terminal in busy mode the most important factor in mobility management is to provide an uninterrupted service.

Returning to the third case, a handover instruction acknowledgement message is received by the mobility manager at the step B15. A handover instruction acknowledgement message may be communicated to the mobility manager from the mobile terminal in response to the handover instruction message communicated from the mobility manager to the mobile terminal at the step B7. At a step B16, the mobility manager checks the handover instruction acknowledgement message to confirm that the mobile terminal has successfully changed its current and/or backup access network, and then updates the corresponding current and backup records within the mobility manager. Following this, the mobility manager follows the procedure of steps B9, B10, B5, B11, B12, B13, B14 and B7 as described above.

Using the process of Figure 6, service continuity can be provided to a similar extent to that provided by previous mobility processes, but only one current network interface and one backup interface are used to achieve this. In this way, it is possible to achieve a similar quality of service for the mobile terminal, but with a reduced power usage.

In previous handover instruction messages, only a current access network to be switched to is defined. With the power saving mechanism of Figure 6, an optional field is provided in the handover instruction messages for specifying a backup access network to be used by the mobile terminal. For example, this field could have the following format:

$$\text{BACKUP\_AN ( 33 byte )} = \text{BACKUP\_AN\_Type (1 byte)} + \text{BACKUP\_NET}$$

$$\text{(32 bytes)}.$$

BACKUP_AN_Type specifies the network technology, for example cellular or WLAN, and BACKUP_NET specifies the backup network identifier, for example an SSID (Service Set Identifier) for WLAN and MCC+MNC (Mobile Country Code + Mobile Network Code) for cellular network.

If the value of the "BACKUP_AN" field or the "CURRENT_AN" field in the handover instruction message is NIL (all zeros), this will mean that there is no selection instruction for the backup or current access network respectively. A handover instruction could specify a handover in relation to one or both of the backup and current access networks.

Switching between Busy and **Idle** modes when **moving** between networks

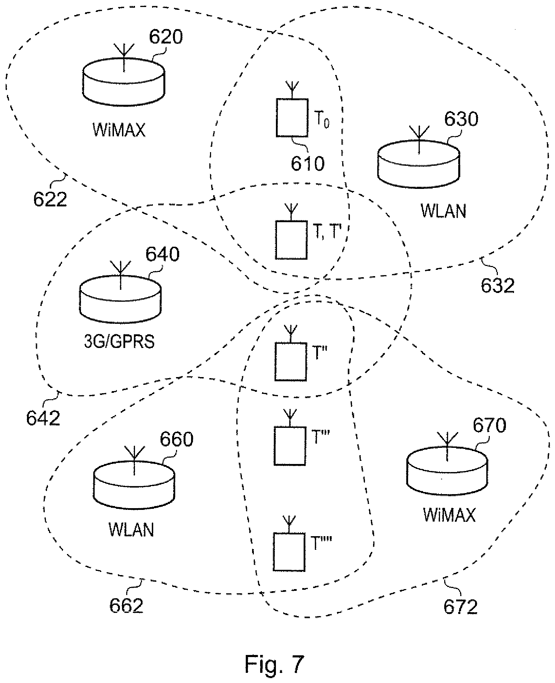

Figure 7 schematically illustrates an example of the present technique, in which it is assumed, for both the busy and idle states of a mobile terminal 610, that a power-consumption ranking for different network interfaces is, in an order of decreasing power consumption, first WiMax, then WLAN, then 3G/GPRS. In Figure 7, the mobile terminal is shown transiting through the radio-coverage areas of a plurality of access networks between a time $T_0$ and a time T'''. The operation of the mobile terminal and an associated mobility manager at several times between $T_0$ and T''' is described herein and is summarised in Table 2.

Initially, at a time $T_0$, two co-located networks (WiMax 620, WLAN 630) are available for use by the mobile terminal. When the mobile terminal 610 is switched on, it may by default activate the WLAN interface. At this time, the mobile terminal 610 is in an idle mode, and sends a context activation access network evaluation message to the mobility manager (MM). This triggers the mobility manager to initiate a handover decision process, and in the present case the mobility manager decides that the WLAN 630 is the most suitable network for the mobile terminal 610 at the moment, and so no switch of access network is required. Both the 3G/GPRS and the WiMax interface are deactivated to conserve power. The mobile terminal 610 sets the access network evaluation message reporting frequency based on the current conditions (e.g. IDLE , in WLAN).

At a time T, the mobile terminal 610 moves into the coverage area 642 of a 3G/GPRS access network 640, but remains with the coverage areas 622, 632 of both the WLAN 630 and the WiMax network 620. Accordingly, at the time T, all three networks (WiMax, WLAN, 3G/GPRS) are available for communication by the mobile terminal 610. The mobility manager knows that the mobile terminal 610 has entered the 3G/GPRS coverage area 642 due to the receipt of normal access network evaluation messages from the mobile terminal 610. Then, the mobility manager 160 (see Figure 2) queries the neighbouring cell table to determine which access networks are available. In this case the mobility manager will determine that all three networks 620, 630, 640 (WiMax, WLAN, 3G/GPRS) are available. This determination triggers the handover decision process, and the mobility manager then decides that the 3G/GPRS network is the most power-saving access network for the idle mobile terminal at that time. Accordingly, the mobility manager instructs the mobile terminal 610 to change its current access network from WLAN to 3G/GPRS. The mobile terminal 610 may then update the access network evaluation message reporting frequency to further reduce power consumption.

At a time T', the mobile terminal communicates a new service request to the mobility manager. In response, the mobility manager instructs the mobile terminal to launch the new service on 3G/GPRS. The mobility manager then performs a backup access network selection process, and as a result selects WLAN as the backup access network for the mobile terminal. The mobile terminal activates the WLAN interface (in addition to the 3G/GPRS interface), and keeps the WiMax interface deactivated. The mobile terminal updates the access network evaluation message frequency due to the state change from idle mode to busy mode.

At a time T", the mobile terminal has left the radio-coverage areas of the WLAN 630 and the WiMax network 620, but has moved into the radio-coverage areas of a WLAN 660 and a WiMax network 670. The mobile terminal is about to move out of the radio coverage area of the 3G/GPRS network, but the service session, which is currently being provided by the 3G/GPRS network is not yet finished. When the mobility manager receives an access network evaluation message which indicates that the 3G/GPRS network is soon to become unavailable, the mobility manager queries the neighbouring cells table and from this determines that both the WLAN 660 and WiMax 670 are located in the same area. At time T'" the mobility manager initiates a network reselection process for both the current and backup access networks of the multi-mode terminal and as a result decides that the WLAN 660 should be used as the new current access network for the mobile terminal, and that the WiMax network 670 should be used as its new backup access network. The mobility manager then issues a handover instruction to the mobile terminal to this effect. Upon receipt of the handover instruction message, the mobile terminal changes its current access network from 3G/GPRS to WLAN, activates WiMax as the backup interface, and deactivates its 3G/GPRS interface to save power. The mobile terminal may also adapt the access network evaluation message reporting frequency according to the change of current access network.

At a time T"", the service session is finished, and the mobility manager is notified about the service termination. The state of the mobile terminal is switched from busy mode to idle mode, and so only a current access network is required. The mobile terminal therefore deactivates its WiMax interface, and keeps only its WLAN interface activated. Moreover, the mobile terminal may update the access network evaluation message reporting frequency to further reduce power consumption.

**Table 2**

| Time | Service State | Available Access Networks | Current Access Network | Backup Access Network | Powered-off access network interface | ANEmn Frequency |
|------|---------------|---------------------------|------------------------|-----------------------|--------------------------------------|-----------------|
| $T_0$ | IDLE | WiMax 620 WLAN 630 | WLAN 630 | / | WiMax 3G/GPRS | 1st instruction |
| $T$ | IDLE | WiMax 620 WLAN 630 3G/GPRS 650 | 3G/GPRS 650 | / | WiMax WLAN | DOWN |
| $T'$ | BUSY | WiMax 670 WLAN 660 3G/GPRS 650 | 3G/GPRS 650 | WLAN 660 | WiMax | UP |
| $T''$ | BUSY | WLAN 660 WiMax 670 | WLAN 660 | WiMax 620 | 3G/GPRS | UP |
| $T'''$ | IDLE | WLAN 660 WiMax 670 | WLAN 660 | / | 3G/GPRS | DOWN |

Embodiments of the present invention can provide a significant reduction in the power consumed by a mobile terminal. For example, in order to reduce a likelihood of an interruption to a communications service, the mobile terminal may be required to maintain more than one connection to different access networks. Although the access networks may operate in accordance with the same communications interface standard, the connections may required to operate in accordance with different interface standards such as GPRS, WiFi, WiMax or Bluetooth. As a result, if the mobile terminal is arranged to communicate using each of a plurality of communications interfaces, then to provide a substantially un-interrupted communications service, it has previously been necessary to arrange for each of these communications interfaces to be in an active state, which can cause a significant drain on a power supply of the mobile terminal.

Various modifications of the embodiments herein before described may be made without departing from the scope of the present invention. For example embodiments of the present invention can utilise wired as well as wired access networks and various other wired and wireless access networks can be used to to communicate with mobile terminals without departing from the scope of the present invention.

**Claims**

1. A telecommunications system, comprising
   a plurality of access networks of different types operable to provide a facility for mobile terminals (12, 14, 16, 18, 20) to communicate data in accordance with a communication service when in a coverage area provided by the access network, and
   a mobility manager (160) operable
   to receive network evaluation messages ($ANE_{AP1, AP2}$) from a mobile terminal (150) providing an indication of a quality of service, QoS, available via a communications link with one or more of the plurality of access networks, which are currently available for communicating data,
   to identify one of the access networks (30, 40, 42, 44, 46, 48) with which the mobile terminal should become affiliated for communicating the data via a communications link provided with the access network, and
   to communicate an instruction ($HI_{AP2}$) to the mobile terminal to change affiliation to the identified access network, wherein the mobility manager is operable to identify the access network with which the mobile terminal should become affiliated in accordance with the QoS available with the identified access network and an amount of power the mobile terminal will consume when communicating the data via the identified access network, and wherein the mobility manager is operable to send to the mobile terminals messages including a field indicating which sending frequency value to use for the network evaluation messages, the sending frequency value being determined considering access network types.

2. A telecommunications system according to claim 1, wherein the communications link with the access network to which the mobile terminal is to become affiliated is a current communications link, the access network being a first access network and wherein the mobile terminal is provided with a backup communications link to a second access network, the second access network being identified by the mobility manager in accordance with an amount of power, which the mobile terminal may consume when communicating via a communications link established via the first or the second access network.

3. A telecommunications system according to claim 2, wherein the mobile terminal is operable to communicate the access network evaluation messages ($ANE_{AP1, AP2}$) to the mobility manager when the current communications link is being used to support a communications session with a greater frequency than when the current communications link is not being used to support a communications session.

4. A telecommunications system according to any preceding claim, wherein the mobility manager is operable to determine a list of possible access networks to which the mobile terminal could be affiliated in accordance with a current location of the mobile terminal.

5. A telecommunications system according to claim 4, wherein the list of possible access networks is determined by accessing a neighbouring cells table which specifies, for each of a plurality of radio-coverage cells, neighbouring radio-coverage cells of the same or a different access network.

6. A telecommunications system according to any preceding claim, wherein the mobile terminal has a plurality of communications interfaces for communicating via a plurality of communications links provided to respective access networks, and wherein the mobile terminal is operable, in response to a power message sent from the mobility manager which identifies access networks, to activate the communications interfaces corresponding to the access networks identified by the mobility manager and to deactivate one or more communication interfaces not identified by the mobility manager.

7. A mobility manager (160) for managing the mobility of a mobile terminal (150) within a plurality of access networks of different types operable to provide a facility for mobile terminals to communicate data in accordance with a communications service when in a coverage area provided by the access network,
   the mobility manager being operable
   to receive network evaluation messages ($ANE_{AP1, AP2}$) from a mobile terminal providing an indication of a quality of service, QoS, available via a communications link with one or more of the plurality of access networks, which are currently available for communicating data,
   to identify one of the access networks with which the mobile terminal should become affiliated for communicating the data via a communications link provided with the access network, and
   to communicate an instruction ($HI_{AP2}$) to the mobile terminal to change affiliation to the identified access network, wherein the mobility manager is operable to identify the access network with which the mobile terminal should become affiliated in accordance with the QoS available with the identified access network and an amount of power the mobile terminal will consume when communicating the data via the identified access network, and wherein the mobility manager is operable to send to the mobile terminals messages including a field indicating which sending frequency value to use for the network evaluation messages, the sending frequency value being determined considering access network types.

8. A method for managing the mobility of a mobile terminal (150) within a plurality of access networks of different types operable to provide a facility for mobile terminals to communicate data in accordance with a communications service when in a coverage area provided by the access network, the method comprising

receiving (S1, S2, B8, B1), network evaluation messages ($ANE_{AP1, AP2}$) from a mobile terminal providing an indication of a quality of service, QoS, available via a communications link with one or more of the plurality of access networks, which are currently available for communicating data,

identifying (S5, S12, B3, B11) one of the access networks with which the mobile terminal should become affiliated for communicating the data via a communications link provided with the access network, and

communicating (S9, B7) an instruction ($HI_{AP2}$) to the mobile terminal to change affiliation to the identified access network,

identifying (S8, S14, B6, B10) the access network the mobile terminal should become affiliated with in accordance with the QoS available with the identified access network and an amount of power the mobile terminal will consume when communicating the data via the identified access network, the method further comprising:

sending to the mobile terminals messages including a field indicating which sending frequency value to use for the network evaluation messages, the sending frequency value being determined considering access network types.

9. A computer program providing computer executable instructions which when loaded onto a computer causes the computer to perform the method according to claim 8.

**Patentansprüche**

1. Telekommunikationssystem, das Folgendes umfasst eine Vielzahl von Zugangsnetzwerken unterschiedlicher Typen, die betreibbar sind, eine Einrichtung für mobile Endgeräte (12, 14, 16, 18, 20) bereitzustellen, um Daten gemäß einem Kommunikationsdienst zu kommunizieren, wenn sie sich in einem Abdeckungsgebiet befinden, das vom Zugangsnetzwerk bereitgestellt wird, und

einen Mobilitätsverwalter (160), der zu Folgendem betreibbar ist

Empfangen von Netzwerkbeurteilungsnachrichten ($ANE_{AP1, AP2}$) von einem mobilen Endgerät (150), die eine Anzeige einer Dienstgüte, QoS, bereitstellen, die via eine Kommunikationsverbindung mit einem oder mehreren der Vielzahl von Zugangsnetzwerken, die derzeit zum Kommunizieren von Daten verfügbar sind, verfügbar ist, Identifizieren von einem der Zugangsnetzwerke (30, 40, 42, 44, 46, 48), an das sich das mobile Endgerät zum Kommunizieren der Daten via eine Kommunikationsverbindung, die mit dem Zugangsnetzwerk bereitgestellt wird, anbinden sollte, und Kommunizieren einer Anweisung ($HI_{AP2}$) zum mobilen Endgerät, um die Anbindung in das identifizierte Zugangsnetzwerk zu ändern,

wobei der Mobilitätsverwalter zu Folgendem betreibbar ist

Identifizieren des Zugangsnetzwerks, an das sich das mobile Endgerät gemäß der QoS, die mit dem identifizierten Zugangsnetzwerk verfügbar ist, und einer Menge Strom, die das mobile Endgerät verbraucht, wenn es die Daten via das identifizierte Zugangsnetzwerk kommuniziert, anbinden sollte, und wobei

der Mobilitätsverwalter betreibbar ist, Nachrichten an die mobilen Endgeräte zu senden, die ein Feld beinhalten, das anzeigt, welcher Sendefrequenzwert für die Netzwerkbeurteilungsnachrichten zu verwenden sind, wobei der Sendefrequenzwert unter Berücksichtigung von Zugangsnetzwerkstypen bestimmt wird.

2. Telekommunikationssystem nach Anspruch 1, wobei die Kommunikationsverbindung mit dem Zugangsnetzwerk, an das sich das mobile Endgerät anbinden soll, eine aktuelle Kommunikationsverbindung ist, wobei das Zugangsnetzwerk ein erstes Zugangsnetzwerk ist und wobei dem mobilen Endgerät eine Kommunikationsersatzverbindung zu einem zweiten Zugangsnetzwerk bereitgestellt wird, wobei das zweite Zugangsnetzwerk vom Mobilitätsverwalter gemäß einer Menge Strom, die das mobile Endgerät möglicherweise verbraucht, wenn es via eine Kommunikationsverbindung kommuniziert, die via das erste oder das zweite Zugangsnetzwerk hergestellt ist, identifiziert wird.

3. Telekommunikationssystem nach Anspruch 2, wobei das mobile Endgerät betreibbar ist, die Zugangsnetzwerkbeurteilungsnachrichten ($ANE_{AP1, AP2}$) zum Mobilitätsverwalter zu kommunizieren, wenn die aktuelle Kommunikationsverbindung verwendet wird, um eine Kommunikationssitzung mit einer größeren Frequenz zu unterstützen, als wenn die aktuelle Kommunikationsverbindung nicht verwendet wird, um eine Kommunikationssitzung zu unterstützen.

4. Telekommunikationssystem nach einem der vorhergehenden Ansprüche, wobei der Mobilitätsverwalter betreibbar ist, eine Liste möglicher Zugangsnetzwerke zu bestimmen, an die das mobile Endgerät gemäß einem aktuellen Standort des mobilen Endgeräts angebunden werden könnte.

5. Telekommunikationssystem nach Anspruch 4, wobei die Liste möglicher Zugangsnetzwerke durch Zugreifen auf eine Nachbarzellentabelle bestimmt wird, die für jede einer Vielzahl von Funkabdeckungszellen benachbarte Funkabdeckungszellen desselben oder eines anderen Zugangsnetzwerks spezifiziert.

6. Telekommunikationssystem nach einem der vorhergehenden Ansprüche, wobei das mobile Endgerät eine Vielzahl von Kommunikationsschnittstellen zum Kommunizieren via eine Vielzahl von Kommunikationsverbindungen, die zu jeweiligen Zugangsnetzwerken bereitgestellt sind, aufweist und wobei das mobile Endgerät betreibbar ist, in Reaktion auf eine Stromnachricht, die vom Mobilitätsverwalter gesendet wird und die Zugangsnetzwerke identifiziert, die Kommunikationsschnittstellen, die den vom Mobilitätsverwalter identifizierten Zugangsnetzwerken entsprechen, zu aktivieren und eine oder mehrere Kommunikationsschnittstellen, die vom Mobilitätsverwalter nicht identifiziert wurden, zu deaktivieren.

7. Mobilitätsverwalter (160) zum Verwalten der Mobilität eines mobilen Endgeräts (150) in einer Vielzahl von Zugangsnetzwerken unterschiedlicher Typen, die betreibbar sind, eine Einrichtung für mobile Endgeräte bereitzustellen, um Daten gemäß einem Kommunikationsdienst zu kommunizieren, wenn sie sich in einem Abdeckungsgebiet befinden, das vom Zugangsnetzwerk bereitgestellt wird,
wobei der Mobilitätsverwalter zu Folgendem betreibbar ist
Empfangen von Netzwerkbeurteilungsnachrichten ($ANE_{AP1,\ AP2}$) von einem mobilen Endgerät, die eine Anzeige einer Dienstgüte, QoS, bereitstellen, die via eine Kommunikationsverbindung mit einem oder mehreren der Vielzahl von Zugangsnetzwerken verfügbar ist, die derzeit zum Kommunizieren von Daten verfügbar sind, Identifizieren von einem der Zugangsnetzwerke, an das sich das mobile Endgerät zum Kommunizieren der Daten via eine Kommunikationsverbindung, die mit dem Zugangsnetzwerk bereitgestellt wird, anbinden sollte, und
Kommunizieren einer Anweisung ($HI_{AP2}$) zum mobilen Endgerät, um die Anbindung in das identifizierte Zugangsnetzwerk zu ändern,
wobei der Mobilitätsverwalter zu Folgendem betreibbar ist
Identifizieren des Zugangsnetzwerks, an das sich das mobile Endgerät gemäß der QoS, die mit dem identifizierten Zugangsnetzwerk verfügbar ist, und einer Menge Strom, die das mobile Endgerät verbraucht, wenn es die Daten via das identifizierte Zugangsnetzwerk kommuniziert, anbinden sollte, und wobei
der Mobilitätsverwalter betreibbar ist, Nachrichten an die mobilen Endgeräte zu senden, die ein Feld beinhalten, das anzeigt, welcher Sendefrequenzwert für die Netzwerkbeurteilungsnachrichten zu verwenden sind, wobei der Sendefrequenzwert unter Berücksichtigung von Zugangsnetzwerkstypen bestimmt wird.

8. Verfahren zum Verwalten der Mobilität eines mobilen Endgeräts (150) in einer Vielzahl von Zugangsnetzwerken unterschiedlicher Typen, die betreibbar sind, eine Einrichtung für mobile Endgeräte bereitzustellen, um Daten gemäß einem Kommunikationsdienst zu kommunizieren, wenn sie sich in einem Abdeckungsgebiet befinden, das vom Zugangsnetzwerk bereitgestellt wird, wobei das Verfahren Folgendes umfasst
Empfangen (S1, S2, B8, B1) von Netzwerkbeurteilungsnachrichten ($ANE_{AP1,\ AP2}$) von einem mobilen Endgerät, die eine Anzeige einer Dienstgüte, QoS, bereitstellen, die via eine Kommunikationsverbindung mit einem oder mehreren der Vielzahl von Zugangsnetzwerken verfügbar ist, die derzeit zum Kommunizieren von Daten verfügbar sind, Identifizieren (S5, S12, B3, B11) von einem der Zugangsnetzwerke, an das sich das mobile Endgerät zum Kommunizieren der Daten via eine Kommunikationsverbindung, die mit dem Zugangsnetzwerk bereitgestellt wird, anbinden sollte, und
Kommunizieren (S9, B7) einer Anweisung ($HI_{AP2}$) zum mobilen Endgerät, um die Anbindung in das identifizierte Zugangsnetzwerk zu ändern, Identifizieren (S8, S14, B6, B10) des Zugangsnetzwerks, an das sich das mobile Endgerät gemäß der QoS, die mit dem identifizierten Zugangsnetzwerk verfügbar ist, und einer Menge Strom, die das mobile Endgerät verbraucht, wenn es die Daten via das identifizierte Zugangsnetzwerk kommuniziert, anbinden sollte,
wobei das Verfahren ferner Folgendes umfasst:
Senden von Nachrichten an die mobilen Endgeräte, die ein Feld beinhalten, das anzeigt, welcher Sendefrequenzwert für die Netzwerkbeurteilungsnachrichten zu verwenden sind, wobei der Sendefrequenzwert unter Berücksichtigung von Zugangsnetzwerkstypen bestimmt wird.

**9.** Computerprogramm, das computerausführbare Anweisungen bereitstellt, die, wenn sie in einen Computer geladen werden, den Computer veranlassen, das Verfahren nach Anspruch 8 durchzuführen.

**Revendications**

**1.** Système de télécommunications comprenant :

une pluralité de réseaux d'accès de différents types pouvant fonctionner pour offrir la possibilité à des terminaux mobiles (12, 14, 16, 18, 20) de communiquer des données conformément à un service de communication lorsqu'ils se trouvent dans une zone de couverture fournie par le réseau d'accès, et
un gestionnaire de mobilité (160) pouvant fonctionner pour
recevoir des messages d'évaluation de réseau ($ANE_{AP1, AP2}$) depuis un terminal mobile (150) donnant une indication d'une qualité de service, QoS, disponible par le biais d'une liaison de communication avec un ou plusieurs de la pluralité de réseaux d'accès, qui sont disponibles pour communiquer des données,
identifier l'un des réseaux d'accès (30, 40, 42, 44, 46, 48) avec lequel le terminal mobile doit s'affilier pour communiquer les données par le biais d'une liaison de communication fournie avec le réseau d'accès, et
communiquer une instruction ($HI_{AP2}$) au terminal mobile de changement d'affiliation au réseau d'accès identifié, dans lequel le gestionnaire de mobilité peut fonctionner pour
identifier le réseau d'accès avec lequel le terminal mobile doit s'affilier conformément à la QoS disponible avec le réseau d'accès identifié et à une quantité d'énergie que le terminal mobile va consommer en communiquant les données par le biais du réseau d'accès identifié, et dans lequel
le gestionnaire de mobilité peut fonctionner pour envoyer aux terminaux mobiles des messages incluant un champ indiquant quelle valeur de fréquence d'envoi utiliser pour les messages d'évaluation de réseau, la valeur de fréquence d'envoi étant déterminée en tenant compte des types de réseaux d'accès.

**2.** Système de télécommunications selon la revendication 1, dans lequel la liaison de communication avec le réseau d'accès auquel le terminal mobile doit s'affilier est une liaison de communication courante, le réseau d'accès étant un premier réseau d'accès, et dans lequel le terminal mobile est doté d'une liaison de communication de secours à un second réseau d'accès, le second réseau d'accès étant identifié par le gestionnaire de mobilité conformément à une quantité d'énergie que le terminal mobile peut consommer en communiquant par le biais d'une liaison de communication établie par le biais du premier ou du second réseau d'accès.

**3.** Système de télécommunications selon la revendication 2, dans lequel le terminal mobile peut fonctionner pour communiquer les messages d'évaluation de réseaux d'accès ($ANE_{AP1, AP2}$) au gestionnaire de mobilité lorsque la liaison de communication courante est en cours d'utilisation pour la prise en charge d'une session de communication avec une fréquence supérieure à celle lorsque la liaison de communication courante n'est pas en cours d'utilisation pour la prise en charge d'une session de communication.

**4.** Système de télécommunications selon l'une quelconque des revendications précédentes, dans lequel le gestionnaire de mobilité peut fonctionner pour déterminer une liste de réseaux d'accès possibles auxquels le terminal mobile peut s'affilier en fonction d'un emplacement courant du terminal mobile.

**5.** Système de télécommunications selon la revendication 4, dans lequel la liste de réseaux d'accès possibles est déterminée en accédant à une table de cellules voisines qui spécifie, pour chacune d'une pluralité de cellules de couverture radio, les cellules de couverture radio voisines du même réseau d'accès ou d'un réseau d'accès différent.

**6.** Système de télécommunications selon l'une quelconque des revendications précédentes, dans lequel le terminal mobile a une pluralité d'interfaces de communication destinées à communiquer par le biais d'une pluralité de liaisons de communication fournies avec des réseaux d'accès respectifs, et dans lequel le terminal mobile peut fonctionner pour, en réponse à un message de mise sous tension envoyé depuis le gestionnaire de mobilité qui identifie les réseaux d'accès, activer les interfaces de communication correspondant aux réseaux d'accès identifiés par le gestionnaire de mobilité et désactiver une ou plusieurs interfaces de communication non identifiées par le gestionnaire de mobilité.

**7.** Gestionnaire de mobilité (160) destiné à gérer la mobilité d'un terminal mobile (150) dans une pluralité de réseaux d'accès de différents types pouvant fonctionner pour donner la possibilité à des terminaux mobiles de communiquer des données conformément à un service de communication lorsqu'ils se trouvent dans une zone de couverture fournie par le réseau d'accès,

le gestionnaire de mobilité pouvant fonctionner pour

recevoir des messages d'évaluation de réseau ($ANE_{AP1, AP2}$) depuis un terminal mobile donnant une indication d'une qualité de service, QoS, disponible par le biais d'une liaison de communication avec un ou plusieurs de la pluralité de réseaux d'accès, qui sont disponibles pour communiquer des données,

identifier l'un des réseaux d'accès avec lequel le terminal mobile doit s'affilier pour communiquer les données par le biais d'une liaison de communication fournie avec le réseau d'accès, et

communiquer une instruction ($HI_{AP2}$) au terminal mobile de changement d'affiliation au réseau d'accès identifié,

dans lequel le gestionnaire de mobilité peut fonctionner pour

identifier le réseau d'accès avec lequel le terminal mobile doit s'affilier conformément à la QoS disponible avec le réseau d'accès identifié et à une quantité d'énergie que le terminal mobile va consommer en communiquant les données par le biais du réseau d'accès identifié, et dans lequel

le gestionnaire de mobilité peut fonctionner pour envoyer aux terminaux mobiles des messages incluant un champ indiquant quelle valeur de fréquence d'envoi utiliser pour les messages d'évaluation de réseau, la valeur de fréquence d'envoi étant déterminée en tenant compte des types de réseaux d'accès.

8. Procédé de gestion de la mobilité d'un terminal mobile (150) dans une pluralité de réseaux d'accès de différents types pouvant fonctionner pour donner la possibilité à des terminaux mobiles de communiquer des données conformément à un service de communication lorsqu'ils se trouvent dans une zone de couverture fournie par le réseau d'accès, le procédé comprenant

la réception (S1, S2, B8, B1) de messages d'évaluation de réseau ($ANE_{AP1, AP2}$) depuis un terminal mobile donnant une indication d'une qualité de service, QoS, disponible par le biais d'une liaison de communication avec un ou plusieurs de la pluralité de réseaux d'accès, qui sont disponibles pour communiquer des données,

l'identification (S5, S12, B3, B11) de l'un des réseaux d'accès avec lequel le terminal mobile doit s'affilier pour communiquer les données par le biais d'une liaison de communication fournie avec le réseau d'accès, et

la communication (S9, B7) d'une instruction ($HI_{AP2}$) au terminal mobile de changement d'affiliation au réseau d'accès identifié,

l'identification (S8, S14, B6, B10) du réseau d'accès avec lequel le terminal mobile doit s'affilier conformément à la QoS disponible avec le réseau d'accès identifié et à une quantité d'énergie que le terminal mobile va consommer en communiquant les données par le biais du réseau d'accès identifié,

le procédé comprenant en outre :

l'envoi aux terminaux mobiles de messages incluant un champ indiquant quelle valeur de fréquence d'envoi utiliser pour les messages d'évaluation de réseau, la valeur de fréquence d'envoi étant déterminée en tenant compte des types de réseaux d'accès.

9. Programme d'ordinateur comprenant des instructions exécutables par ordinateur qui, lorsqu'elles sont chargées sur un ordinateur, amènent l'ordinateur à exécuter le procédé selon la revendication 8.

Fig. 1

Fig. 2

Fig. 3

ANEmn Frequency Adaptation

IDLE

BUSY

CURRENT/
BACKUP
AN update

CURRENT AN update
ANEmn Frequency Adaptation

ANEmn Frequency Adaptation

ANEmn Frequency Adaptation

Fig. 4

Fig. 5

Fig. 6

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050048977 A
- EP 1435748 A
- US 2005239443 A1
- EP 1670273 A
- US 20060099952 A
- WO 03047296 A